# EUROPEAN PATENT SPECIFICATION

(11) **EP 2 632 123 B1**
(45) Date of publication and mention of the grant of the patent: **16.05.2018**
(21) Application number: 12156994.1
(22) Date of filing: 24.02.2012
(51) Int. Cl.: H04M 1/04, H04M 1/02, H04M 1/725, H04B 1/38

(54) **Mechanically attached folding cover**
Mechanisch befestigter Klappdeckel
Couvercle pliable fixé mécaniquement

(43) Date of publication of application: 28.08.2013
(73) Proprietor: BlackBerry Limited, Waterloo, ON N2K 0A7 (CA)
(72) Inventor: Smith, Dustin Jonathan, Waterloo, Ontario N2L 3W8 (CA); Wood, Todd Andrew, Waterloo, Ontario N2L 3W8 (CA); Fahrendorff, Anders, Kanata, Ontario K2K 3K1 (CA); Murchison, Ian James, Waterloo, Ontario N2L 3W8 (CA)
(74) Representative: Gill Jennings & Every LLP

(56) References cited:
- EP-A1- 1 383 297
- FR-A1- 2 777 758
- US-A1- 2006 007 645
- US-A1- 2010 048 268

## Description

### BACKGROUND

A mobile electronic device can be a tablet computer, cellular phone, including a smart phone, a dedicated personal digital assistant (PDA) with or without phone or data capabilities, an electronic reading device, a digital media player, or any other mobile device. In many instances, the terms "mobile device," "hand held device" and "hand set" are interchangeable, both regarding to electronic devices available as information stores for personal contacts, calendar appointments, and the like. Since users often carry their mobile electronic devices with them throughout the day, the most popular covers for containing and protecting the devices are those that are compact and easy to use. Insecure or loose fitting covers interfere with the usability of the device, as do bulky covers.

US2010/0048268 describes a mobile device accessory for attachment to a mobile device can include both an attachment portion as well as an accessory portion. The attachment portion can comprise a battery cover or replica battery cover. Further, the accessory portion can comprise a flexible cover configured to remain on the phone during use and protect the outside of the mobile device when closed.

US2006/0007645 describes a foldable computer cover that includes: a first panel, a second panel, a third panel, a fourth panel and a fifth panel, wherein a front end of the fifth panel is foldably connected to a back end edge of the fourth panel, a front end of the fourth panel is foldably connected to a back end edge of third panel and so, so all the panels are connected together. The user can open the first panel and fold it to support the portable computer, and places the bottom of the portable computer along one of the stop ridges of the saw-toothed shaped stop on the third panel to hold the portable computer upright. The user can choose different stop ridges for placement of the portable computer at different viewing angles. FR2777758 describes a strap which is molded to the contours of a pocket computer. To the strap is fixed a tension hinge system which connects one or two protective plaques designed to cover the back and front of the computer. Attached to the plaques is a closing tab, and a suspension ring to which a belt clip can be fitted.

EP1383297 describes a cover which provides an electronic equipment with a plurality of distinctive appearances. The cover is removably attachable to a housing which includes operating buttons and a display panel. The cover comprises at least one part thereof comprising material being mouldable by a user of the electronic equipment by heating the material to a temperature well above environment temperature.

### SUMMARY

According to one aspect, there is provided a cover for a mobile electronic device, according to claim 1 of the appended claims.

According to another aspect, there is provided a method of coupling a cover to a mobile electronic device, according to claim 13 of the appended claims.

### DESCRIPTION OF DRAWINGS

FIG. 1 is a perspective view of an example cover for a mobile electronic device with the cover shown closed and the mobile electronic device inside.
FIG. 2 is a perspective view of the cover of FIG. 1 with the cover shown open and propped in a near upright position for viewing the mobile electronic device.
FIG. 3 is a perspective view of the cover of FIG. 1 with the cover shown apart from a mobile electronic device.
FIG. 4 is a detail side cross-sectional view of the cover of FIG. 1 and a mobile electronic device showing a snap for attaching the cover to the mobile electronic device.
FIG. 5 is a perspective view of the cover of FIG. 1 with the cover shown open and propped in a screen typing position for viewing and typing on the mobile electronic device.
FIG. 6 is a perspective view of the cover of FIG. 1 with the cover shown open and propped in an alternate near upright position for viewing the mobile electronic device.

Like reference symbols in the various drawings indicate like elements.

### DETAILED DESCRIPTION

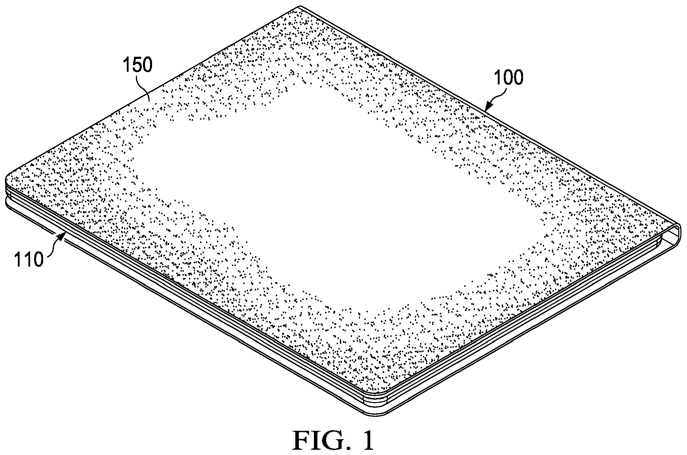

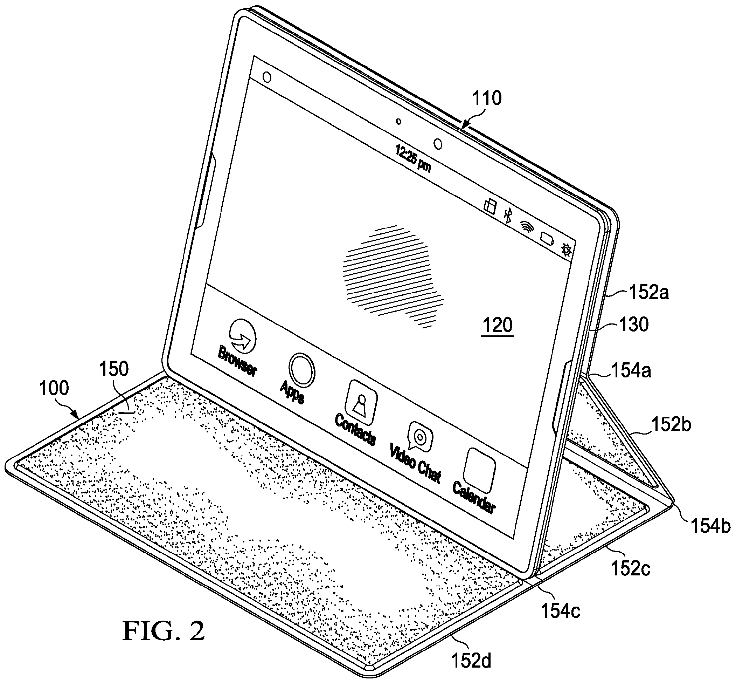

FIG. 1 is a perspective of an example cover 100 for a mobile electronic device 110 with the cover shown closed and the mobile electronic device 110 inside. FIG. 2 is a perspective view of the cover 100 shown open and propped in a near upright position. The example cover 100, a folio type cover, is but one example of a number of different forms of covers that the concepts herein can be applied to. For example, the cover can take the form of a case, a skin, a holster, a pocket, a sleeve, a slip case, an envelope, and/or another form. As will be described in more detail below, the cover 100 has a body portion 150 adapted to cover (substantially or entirely) at least one face of the mobile electronic device 110. The body portion 150 includes a part of a male/female coupling that mates with a corresponding part of the male/female coupling of the mobile electronic device 110. The parts cooperate to attach the cover 100 to the mobile electonic device 110.

The mobile electronic device 110 can be hand held and can be a tablet computer, a cellular phone, including a smart phone, a dedicated personal digital assistant (PDA) with or without phone or data capabilities, an electronic reading device, a digital media player, or any other mobile device. In many instances, the terms "mobile device," "hand held device" and "hand set" are interchangeable, regarding to electronic devices available as information stores for personal contacts, calendar appointments, and the like. The mobile device can have a battery, enabling the device to be operated without a power cord. Additionally, many mobile devices wirelessly connect to the public Internet to allow for the sending and receiving of e-mail. Such mobile devices may also provide more general Internet access, such as access to the World Wide Web. For example, the mobile device 110 may be designed to operate with the General Packet Radio Service (GPRS) mobile data communication networks and may also be designed to operate with any of a variety of voice communication networks, such as AMPS, TDMA, CDMA, PCS, GSM, etc. Other types of data and voice networks, both separate and integrated, may also be utilized with the mobile device 110.

In certain instances, the mobile device 110 is a two-way RF communication device having voice and data communication capabilities. In addition, the mobile device 110 can have the capability to communicate with other mobile devices or computer systems via the Internet.

The mobile device 110 includes a front panel 120 with a screen that defines the front face of the mobile device 110. The front panel 120 is planar (substantially or entirely). A back panel 130 (shown in FIG. 2) is attached to the back side of the front panel, and defines a back face of the mobile device 110. The back panel 130 is planar (substantially or entirely). The front panel 120 cooperates with the back panel 130 to house inner components of the mobile device 110.

The screen can be both an input device (i.e., a touch sensitive device) and an output device (i.e., a display). In some embodiments, the screen is a light emitting diode (LED) backlit liquid crystal display (LCD) with multi-touch control functions. Some of these features may be omitted in other examples. For example, the screen may lack the multi-touch control functions, or the screen may lack the LED backlit feature. In some embodiments, the mobile device 110 may include additional features, such as a front and/or rear camera.

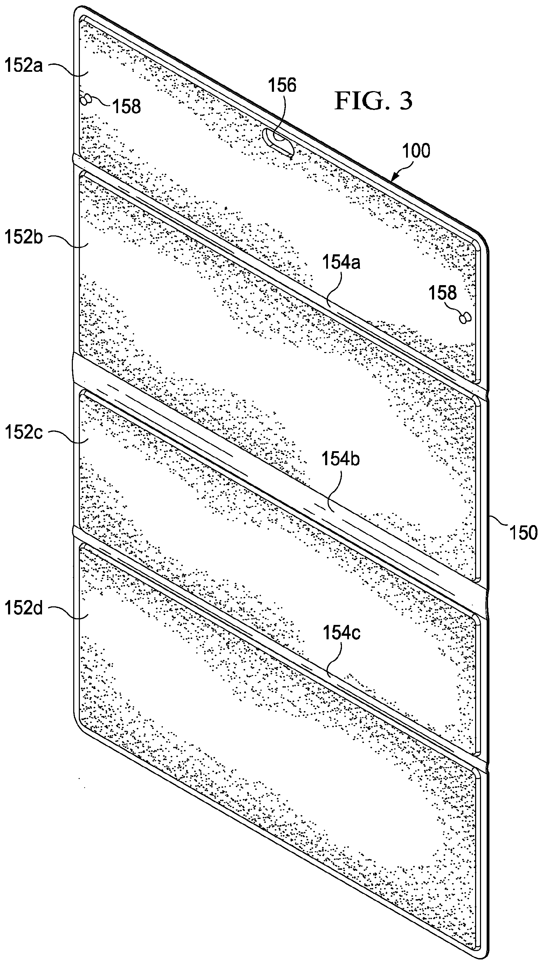

The example cover 100 is made as a single, continuous piece, but could be made as multiple pieces. As seen in FIG. 3, the cover 100 is thin and initially flat, and can be folded around the mobile electronic device 110 to cover the front and/or back face (FIG 1) or manipulated into different shapes to prop the mobile electronic device 110 at different viewing angles (FIGS. 2, 5 and 6). The cover 100 can have various features, including an aperture 156 that allows the camera of the mobile electronic device 110 to see through the cover 100 when the cover 100 is installed to the mobile electronic device 110.

The body portion 150 can be made of one or more rigid sections hinged together. FIG 3 shows four rigid sections 152a-152d hinged together by webs 154a-154c of flexible material. In certain instances, the rigid sections 152a-152d are molded, glass fiber panels filled with a polymer fiber material. However, the rigid sections 152a-152d could be made in a different manner. The flexible material of the webs 154a-154c is a covering material that covers the body portion 150, including the rigid sections 152a-152d. In certain instances, this covering material is polyurethane, leather and/or another material. The rigid sections 152a-d are thicker than the webs 154a-c, and thus the webs 154a-c define recesses on a surface of the cover 100.

A first rigid section 152a carries a part 158 of at least one coupling that, as will be discussed in more detail below, cooperates with a corresponding part of the coupling carried by the mobile electronic device 110 to hold the first rigid section 152a flush against the back face and/or parallel (substantially or precisely) to the back face of the mobile electronic device 110. The coupling is a male/female coupling in that it has a male part that is received in a corresponding female part. FIG 3 shows the first rigid section 152a having two male/female coupling parts 158, each for a separate male/female coupling, but fewer or more parts 158 (and correspondingly, male/female couplings) could be used. If two or more male/female couplings are provided, the multiple points of attachment operate to align the cover 100 with respect to the mobile electronic device 110. For example, two or more male/female couplings can operate to align one or more edges of the cover 100 parallel with (substantially or precisely) and/or flush with one or more edges of the mobile electronic device 110. Because of the male/female nature of the coupling, the male/female coupling does not disengage when loaded in shear as do wholly magnetic couplings. Additionally, the male/female coupling does not need any additional alignment or engagement features to achieve a secure attachment. The male/female coupling can be contained in the interior perimeter of the cover 100 rather than extend from the edges of the cover 100. The coupling also does not to engage the edges of the device 110. As a result, the coupling facilitates a compact cover 100.

A second rigid section 152b is hingedly coupled to the first rigid section 152a via a web 154a. The first and second rigid sections 152a, 152b are sized to cover (substantially or fully) the back face of the mobile electronic device 110. A third rigid section 152c is hingedly coupled to the second rigid section 152b by another web 154b, and a fourth rigid section 152d is hingedly coupled to the third rigid section 152c by yet another web 154c. The third and fourth rigid sections 152c, 152d are sized to cover (substantially or fully) the opposing face (i.e., front face) of the mobile electronic device 110. The third and fourth rigid sections 152c, 152d are positioned relative to the first and second rigid sections 152a, 152b to allow the cover 100 to fold around the mobile electronic device 110 and cover both the front and back face in a closed state as in FIG. 1. One or more magnets can be embedded in the cover 100, for example in the fourth section 152d and/or the third section 152c, with corresponding magnets in the mobile electronic device 110 to magnetically attract the cover 100 to the mobile electronic device 110 and maintain the cover 100 closed. The magnets can be wholly embedded within the cover 100 or a surface of the magnets can be exposed.

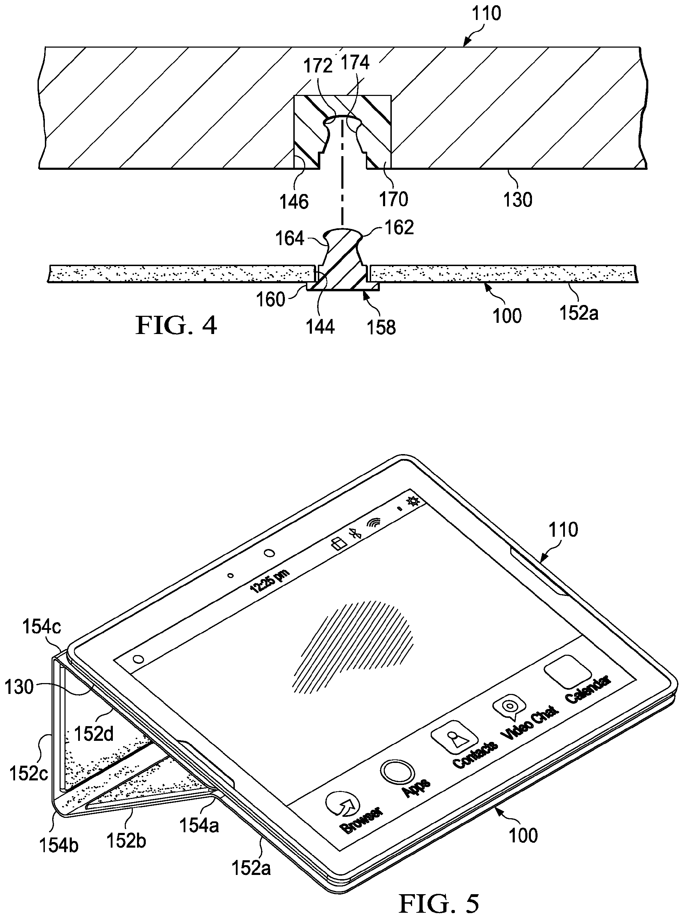

FIG. 4 is a detail side cross-sectional view of the cover 100 and mobile electronic device 110 showing details of an example male/female connector. In this example, the cover 100 incorporates a male part 158 of the male/female connector that protrudes outward from the surface of the cover 100. The male part 158 can be integrally formed into the cover 100, or as shown in the figure, the male part 158 can be formed as an insert that itself is received in an aperture 144 in the cover and has a flange portion 160 that abuts the remainder of the cover 100. The mobile electronic device 110 includes a female part 170 of the male/female connector that internally receives and grips the male part 158. The female part 170 is in the back panel 130 of the device 110. In certain instances, the female part 170 can be formed integrally with the back panel 130, or as is shown in the figure, formed as an insert that itself is received in a holder 146 formed in the back panel 130.

The male/female connector can be configured as a snap. To this end, the male part 158 has a small diameter section 164 at its middle and a larger diameter section 162 at its tip. The female part 170, correspondingly, has an internal profile with a small diameter section 174 at its middle and a larger diameter section 172 near its base. When attaching the cover 100 to the mobile electronic device 110, the larger diameter section 162 of the male part 158 is passed through the smaller diameter section 174 of the female part 170, and the male part 158 and/or the female part 170 are radially, elastically deformed to allow passage. Once the larger diameter section 162 of the male part 158 is past the smaller diameter section 174 of the female part 170, the smaller diameter section 174 of the female part 170 nests with the smaller diameter part 164 of the male part 158 and grips the male part 158. The smaller diameter parts 164 and 174 are curved so that, when snapped, the cover 100 is held tight against and abutting the back panel 130 of the mobile electronic device 110 with the first section 152a flush and/or parallel (substantially or precisely) to the back panel 130. Notably, although discussed with part 158 on the cover 100 being male and the part 170 on the mobile electronic device 110 being female, in other instances, the part 158 could be female and the part 170 could be male.

As noted above, the cover 100 can be manipulated into different shapes to prop the mobile electronic device 110 at different viewing angles. Notably, none of the shapes require magnets or additional fasteners to attain. FIG. 2 shows the cover 100 open, with the mobile electronic device 110 propped in a near upright position (i.e., the smallest angle with the supporting surface is greater than 45 degrees). An edge of the mobile electronic device 110 rests in and is frictionally retained by the recess defined by web 154c between third and fourth rigid sections 152c, 152d. The second rigid section 152b is at an acute angle to the third and fourth rigid sections 152c, 152d (which are parallel, substantially or precisely, to the supporting surface), with the web 154a against or adjacent the back panel 130 of the device 110 to support the device 110 near upright. The web 154a is held against or adjacent the back panel 130, because the first rigid section 152a is attached flush and/or parallel to the back panel 130.

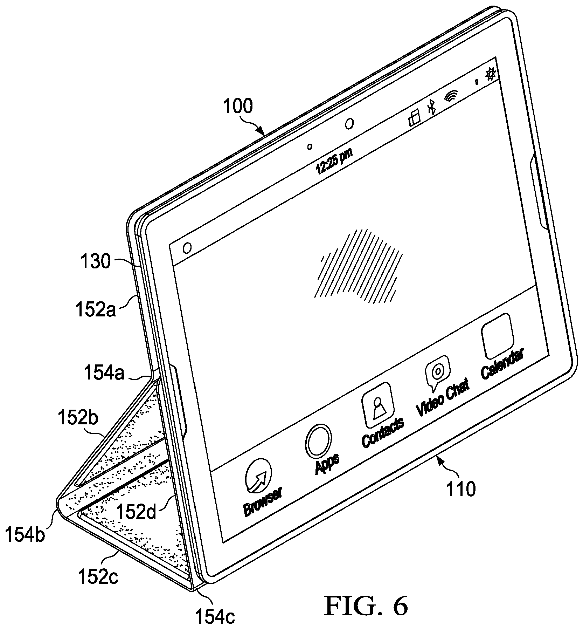

FIG. 5 shows the cover 100 open, with the mobile electronic device 110 propped at a shallow angle to the supporting surface (i.e., the smallest angle with the supporting surface is less than 45 degrees), for example, to facilitate on-screen typing on the mobile electronic device 110. The fourth rigid section 152d is parallel to (substantially or precisely) and abuts the back panel 130, with an edge wedged between and frictionally retained in place by the first rigid section 152a and the back panel 130. The second and third rigid sections 152c and 152b cooperate to define a triangular shape that supports the device 110 at the shallow angle. FIG. 6 shows the cover 100 in the same folded configuration as FIG. 5, but with the mobile electronic device 110 standing near upright.

As will be apparent from the discussion above, the concepts herein encompass a mobile electronic device and cover that are attached with a male/female coupling. In certain instances, the coupling is a snap. The coupling provides a secure engagement of the cover to the device, and in certain instances, alignment of the cover with the device. Some configurations of the cover can have rigid sections that allow the cover to fold to prop the mobile electronic device at different viewing angles. The secure engagement provided by the male/female coupling can facilitate certain folded arrangements.

A number of embodiments have been described. Nevertheless, it will be understood that various modifications may be made. Accordingly, other embodiments are within the scope of the following claims.

## Claims

1. A cover (100) for a mobile electronic device (110), comprising:
a body portion (150) adapted to cover at least one face of the mobile electronic device (110) and comprising a first rigid section (152a), a second rigid section (152b) hingedly coupled to the first rigid section (152a), a third rigid section (152c) hingedly coupled to the second rigid section (152b) and positioned relative to the second rigid section (152b) to cover at least a portion of an opposing face of the mobile electronic device (110), and a fourth rigid section (152d) hingedly coupled to the third rigid section (152c) and sized, together with the third rigid section (152c), to cover the opposing face of the mobile electronic device (110);
a first part of a first coupling carried by the first rigid section (152a) configured to mate with a corresponding second part of the first coupling carried by the mobile electronic device and cooperate with the corresponding second part of the first coupling and attach the cover (100) to the mobile electronic device (110) and hold the first rigid section (152a) flush against and/or parallel to a face of the mobile electronic device (110); and
a first part of a second coupling carried by the first rigid section (152a) configured to mate with a corresponding second part of the second coupling carried by the mobile electronic device (110) and cooperate with the corresponding second part of the second coupling and attach the cover (100) to the mobile electronic device (110), wherein the first and second couplings have a male part (158) that is received in a corresponding female part (170),
wherein the sections (152a-d) are foldable such that, with the first rigid section (152a) held to the face of the mobile electronic device (110) with the first coupling, the fourth rigid section (152d) is parallel to and abutting the face of the mobile electronic device (110), an edge of the fourth rigid section (152d) wedged between the first rigid section (152a) and the face of the mobile electronic device (110), and the second and third rigid sections (152b, 152c) cooperating to define a triangular shape.

2. The cover (100) of claim 1, where the first part of the first coupling carried by the body portion (150) comprises a male part (158) that protrudes outward from a surface of the body portion (150) to be received in a female part (170) of the first coupling carried by the mobile electronic device (110).

3. The cover (100) of claim 1, where the first part of the second coupling carried by the body portion (150) comprises a male part (158) that protrudes outward from a surface of the body portion (150) to be received in a female part (170) of the second coupling carried by the mobile device (110).

4. The cover (100) of claim 1, where the couplings comprise a snap and the first part of the couplings carried by the body portion comprise a male part (158) of the snap.

5. The cover (100) of claim 1, where a first side of the body portion (150) covers one face of the mobile device (110) and a second side of the body portion (150) covers an opposing face of the mobile electronic device (110).

6. The cover (100) of claim 1, where the cover (100) comprises a folio style cover.

7. The cover (100) of claim 1, where the first rigid section (152a) and the second rigid section (152b) are sized to cover the face of the mobile electronic device (110).

8. The cover (100) of claim 1, where the first part of the coupling carried by the first rigid section (152a) comprises a male part (158).

9. The cover (100) of claim 8, wherein the first part of the second coupling is carried by the first rigid section (152a) and where the first part comprises a male part.

10. The cover (100) of claim 1, where sections are hingedly coupled by webs (154a-d) of material between each of the sections (152a-d).

11. The cover (100) of claim 10, where the flexible material of the webs (154a-154c) is a covering material that covers the body portion (150), including the rigid sections (152a-152d).

12. The cover (100) of claim 11, where the flexible material of the webs (154a-154c) is polyurethane or leather.

13. A method of coupling a cover according to any of the preceding claims to a mobile electronic device, the method comprising the steps of:
receiving a first part of a first coupling carried by the first rigid section (152a) together with a first part of a first coupling carried by the mobile electronic device;
receiving a first part of a second coupling carried by the first rigid section (152a) together with a first part of a second coupling carried by the mobile electronic device; and
holding the cover attached to the mobile electronic device with the first coupling and the second coupling.

## Patentansprüche

1. Abdeckung (100) für eine mobile elektronische Vorrichtung (110), wobei die Abdeckung Folgendes umfasst:
einen Körperabschnitt (150), der ausgelegt ist, wenigstens eine Fläche der mobilen elektronischen Vorrichtung (110) zu bedecken, und ein erstes starres Teilstück (152a), ein zweites starres Teilstück (152b), das schwenkbar mit dem ersten starren Teilstück (152a) gekoppelt ist, ein drittes starres Teilstück (152c), das schwenkbar mit dem zweiten starren Teilstück (152b) gekoppelt ist und in Bezug auf das zweite starre Teilstück (152b) so positioniert ist, dass es wenigstens einen Abschnitt einer gegenüberliegenden Fläche der mobilen elektronischen Vorrichtung (110) bedeckt, und ein viertes starres Teilstück (152d), das schwenkbar mit dem dritten starren Teilstück (152c) gekoppelt ist und so bemessen ist, dass es zusammen mit dem dritten starren Teilstück (152c) die gegenüberliegende Fläche der mobilen elektronischen Vorrichtung (110) bedeckt, umfasst;
ein erstes Teil einer ersten Kopplung, das von dem ersten starren Teilstück (152a) getragen wird und so konfiguriert ist, dass es zu einem entsprechenden zweiten Teil der ersten Kopplung, das von der mobilen elektronischen Vorrichtung getragen wird, passt und mit dem entsprechenden zweiten Teil der ersten Kopplung zusammenwirkt und die Abdeckung (100) an der mobilen elektronischen Vorrichtung (110) befestigt und das erste starre Teilstück (152a) bündig mit und/oder parallel zu einer Fläche der mobilen elektronischen Vorrichtung (110) hält; und
ein erstes Teil einer zweiten Kopplung, das von dem ersten starren Teilstück (152a) getragen wird und so konfiguriert ist, dass es zu einem entsprechenden zweiten Teil der zweiten Kopplung, das von der mobilen elektronischen Vorrichtung (110) getragen wird, passt und mit dem entsprechenden zweiten Teil der zweiten Kopplung zusammenwirkt und die Abdeckung (100) an der mobilen elektronischen Vorrichtung (110) befestigt, wobei die erste und die zweite Kopplung ein Steckteil (158) aufweisen, das in einem entsprechenden Buchsenteil (170) aufgenommen wird,
wobei die Teilstücke (152a-d) so gefaltet werden können, dass dann, wenn das erste starre Teilstück (152a) an der Fläche der mobilen elektronischen Vorrichtung (110) mit der ersten Kopplung gehalten wird, das vierte starre Teilstück (152d) parallel zu der Fläche der mobilen elektronischen Vorrichtung (110) ist und daran anliegt, wobei eine Kante des vierten starren Teilstücks (152d) zwischen dem ersten starren Teilstück (152a) und der Fläche der mobilen elektronischen Vorrichtung (110) verkeilt ist, und wobei das zweite und das dritte starre Teilstück (152b, 152c) zusammenwirken, um eine Dreiecksform zu definieren.

2. Abdeckung (100) nach Anspruch 1, wobei das erste Teil der ersten Kopplung, das von dem Körperabschnitt (150) getragen wird, ein Steckteil (158) umfasst, das von einer Oberfläche des Körperabschnitts (150) nach außen vorsteht, um in einem Buchsenteil (170) der ersten Kopplung, das von der mobilen elektronischen Vorrichtung (110) getragen wird, aufgenommen zu werden.

3. Abdeckung (100) nach Anspruch 1, wobei das erste Teil der zweiten Kopplung, das von dem Körperabschnitt (150) getragen wird, ein Steckteil (158) umfasst, das von einer Oberfläche des Körperabschnitts (150) nach außen vorsteht, um in einem Buchsenteil (170) der zweiten Kopplung, das von der mobilen elektronischen Vorrichtung (110) getragen wird, aufgenommen zu werden.

4. Abdeckung (100) nach Anspruch 1, wobei die Kopplungen eine Raste umfassen und das erste Teil der Kopplung, das von dem Körperabschnitt getragen wird, ein Steckteil (158) der Raste umfasst.

5. Abdeckung (100) nach Anspruch 1, wobei eine erste Seite des Körperabschnitts (150) eine Fläche der mobilen Vorrichtung (110) bedeckt und eine zweite Seite des Körperabschnitts (150) eine gegenüberliegende Fläche der mobilen elektronischen Vorrichtung (110) bedeckt.

6. Abdeckung (100) nach Anspruch 1, wobei die Abdeckung (100) eine Abdeckung im Folio-Stil umfasst.

7. Abdeckung (100) nach Anspruch 1, wobei das erste starre Teilstück (152a) und das zweite starre Teilstück (152b) so bemessen sind, dass sie die Fläche der mobilen elektronischen Vorrichtung (110) bedecken.

8. Abdeckung (100) nach Anspruch 1, wobei das erste Teil der Kopplung, das von dem ersten starren Teilstück (152a) getragen wird, ein Steckteil (158) umfasst.

9. Abdeckung (100) nach Anspruch 8, wobei das erste Teil der zweiten Kopplung von dem ersten starren Teilstück (152a) getragen wird und wobei das erste Teil ein Steckteil umfasst.

10. Abdeckung (100) nach Anspruch 1, wobei Teilstücke durch Bahnen (154a-d) aus einem Material zwischen jedem der Teilstücke (152a-d) schwenkbar gekoppelt sind.

11. Abdeckung (100) nach Anspruch 10, wobei das biegsame Material der Bahnen (154a-154c) ein Abdeckmaterial ist, das den Körperabschnitt (150) einschließlich der starren Teilstücke (152a-152d) bedeckt.

12. Abdeckung (100) nach Anspruch 11, wobei das biegsame Material der Bahnen (154a-154c) Polyurethan oder Leder ist.

13. Verfahren zum Koppeln einer Abdeckung nach einem der vorhergehenden Ansprüche mit einer mobilen elektronischen Vorrichtung, wobei das Verfahren die folgenden Schritte umfasst:
Aufnehmen eines ersten Teils einer ersten Kopplung, das von dem ersten starren Teilstück (152a) getragen wird, zusammen mit einem ersten Teil einer ersten Kopplung, das von der mobilen elektronischen Vorrichtung getragen wird;
Aufnehmen eines ersten Teils einer zweiten Kopplung, das von dem ersten starren Teilstück (152a) getragen wird, zusammen mit einem ersten Teil einer zweiten Kopplung, das von der mobilen elektronischen Vorrichtung getragen wird; und
Befestigen der Abdeckung an der mobilen elektronischen Vorrichtung mit der ersten Kopplung und mit der zweiten Kopplung.

## Revendications

1. Protection (100) pour un dispositif électronique mobile (110), comprenant :
une parie corps (150) conçue pour couvrir au moins une face du dispositif électronique mobile (110) et comprenant une première section rigide (152a), une deuxième section rigide (152b) couplée de manière articulée à la première section rigide (152a), une troisième section rigide (152c) couplée de manière articulée à la deuxième section rigide (152b) et positionnée par rapport à la deuxième section rigide (152b) pour couvrir au moins une partie d'une face opposée du dispositif électronique mobile (110), et une quatrième section rigide (152d) couplée de manière articulée à la troisième section rigide (152c) et dimensionnée, conjointement avec la troisième section rigide (152c), pour couvrir la face opposée du dispositif électronique mobile (110) ;
une première partie d'un premier couplage supportée par la première section rigide (152a) étant conçue pour s'accoupler avec une seconde partie correspondante du premier couplage supporté par le dispositif électronique mobile et pour coopérer avec la seconde partie correspondante du premier couplage et pour assujettir la protection (100) au dispositif électronique mobile (110) ainsi que pour maintenir la première section rigide (152a) à fleur contre et/ou parallèle à une face du dispositif électronique mobile (110) ; et
une première partie d'un second couplage supportée par la première section rigide (152a) étant conçue pour s'accoupler avec une seconde partie correspondante du second couplage supportée par le dispositif électronique mobile (110) et pour coopérer avec la seconde partie correspondante du second couplage ainsi que pour fixer la protection (100) au dispositif électronique mobile (110), dans laquelle les premier et second couplages comportent une partie mâle (158) qui est reçue dans une partie femelle correspondante (170),
dans laquelle les sections (152a à d) sont pliantes de sorte que, la première section rigide (152a) étant maintenue sur la face du dispositif électronique mobile (110) par le couplage, la quatrième section rigide (152d) soit parallèle à la face du dispositif électronique mobile (110) et en butée contre cette dernière, un bord de la quatrième section rigide (152d) étant calé la première section rigide (152a) et la face du dispositif électronique mobile (110), et les deuxième et troisième sections rigides (152b, 152c) coopérant pour définir une forme triangulaire.

2. Protection (100) selon la revendication 1, dans laquelle la première partie du premier couplage supportée par la partie corps (150) comprend une partie mâle (158) qui fait saillie vers l'extérieur d'une surface de la partie corps (150) de façon à être reçue dans une partie femelle (170) du second couplage supportée par le dispositif électronique mobile (110).

3. Protection (100) selon la revendication 1, dans laquelle la première partie du second couplage supportée par la partie corps (150) comprend une partie mâle (158) qui fait saillie vers l'extérieur d'une surface de la partie corps (150) de façon à être reçue dans une partie femelle (170) du second couplage supportée par le dispositif mobile (110).

4. Protection (100) selon la revendication 1, dans laquelle les couplages comprennent un bouton pression et la première partie des couplages supportée par la partie corps comprend une partie mâle (158) du bouton pression.

5. Protection (100) selon la revendication 1, dans laquelle un premier côté de la partie corps (150) couvre une face du dispositif mobile (110) et un second côté de la partie corps (150) couvre une face opposée du dispositif électronique mobile (110).

6. Protection (100) selon la revendication 1, dans laquelle la protection (100) comprend une protection de type folio.

7. Protection (100) selon la revendication 1, dans laquelle la première section rigide (152a) et la deuxième section rigide (152b) sont dimensionnées pour couvrir la face du dispositif électronique mobile (110).

8. Protection (100) selon la revendication 1, dans laquelle la première partie du couplage supportée par la première section rigide (152a) comprend une partie mâle (158).

9. Protection (100) selon la revendication 8, dans laquelle la première partie du second couplage est supportée par la première section rigide (152a) et dans laquelle la première partie comprend une partie mâle.

10. Protection (100) selon la revendication 1, dans laquelle des sections sont couplées de manière articulée par des bandes (154a à d) de matériau entre chacune des sections (152a à d).

11. Protection (100) selon la revendication 10, dans laquelle le matériau flexible des bandes (154a à 154c) est un matériau couvrant qui couvre la partie corps (150), y compris les sections rigides (152a à 152d).

12. Protection (100) selon la revendication 11, dans laquelle le matériau flexible des bandes (154a à 154c) est du polyuréthane ou du cuir.

13. Procédé de couplage d'une protection selon l'une quelconque des revendications précédentes à un dispositif électronique mobile, le procédé comprenant les étapes consistant à :
recevoir une première partie d'un premier couplage supportée par la première section rigide (152a) conjointement avec une première partie d'un premier couplage supportée par le dispositif électronique mobile ;
recevoir une première partie d'un second couplage supportée par la première section rigide (152a) conjointement avec un première partie d'un second couplage supportée par le dispositif électronique mobile ; et
maintenir la protection assujettie au dispositif électronique mobile au moyen du premier couplage et du second couplage.
